# EUROPÄISCHE PATENTSCHRIFT

(11) **EP 2 667 048 B1**
(45) Veröffentlichungstag und Bekanntmachung des Hinweises auf die Patenterteilung: **21.05.2014**
(21) Anmeldenummer: 13002189.2
(22) Anmeldetag: 25.04.2013
(51) Int. Cl.: F16D 65/00, B60T 17/22, B60P 3/10

(54) **Mehrteiliger Spülanschlussstutzen für Bremsen**
Multi-part rinse connection supports for brakes
Embout de raccordement de rinçage en plusieurs parties pour des freins

(30) Priorität: 24.05.2012 DE 202012005163 U
(43) Veröffentlichungstag der Anmeldung: 27.11.2013
(73) Patentinhaber: Knott GmbH, 83125 Eggstätt (DE)
(72) Erfinder: Strasser, Josef, 83257 Gstadt am Chiemsee (DE); Hofstetter, Franz, 83125 Eggstätt (DE); Mertinko, Christian, 83349 Palling (DE); Schellerer, Gerhard, 93173 Wenzenbach (DE)
(74) Vertreter: Bauer, Friedrich

(56) Entgegenhaltungen:
- EP-A1- 0 784 182
- FR-A- 1 236 993
- US-A1- 2003 155 443

## Beschreibung

Die vorliegende Erfindung betrifft einen mehrteiligen Spülanschlussstutzen, der beispielsweise mit einer ein Sichtloch aufweisenden Bremseinrichtung verbunden werden kann.

Zum Transportieren von Wasserfahrzeugen auf dem Landweg werden üblicherweise Bootstrailer verwendet. Solche Bootstrailer müssen eine Bremseinrichtung in Form von jeweils einer Radbremse pro Rad umfassen, die üblicherweise als Innenbackenbremsen ausgeführt sind. Mit Bootstrailern transportierte Wasserfahrzeuge können in ein Gewässer abgelassen werden, indem der Bootstrailer zusammen mit dem auf diesem befindlichen Wasserfahrzeug rückwärts in das Gewässer gefahren wird. Bei diesem sogenannten Slippen des Bootstrailers befindet sich dieser unterhalb der Wasseroberfläche, so dass sich auch die Radbremsen unter Wasser befinden.

Dokument EP 0 784 182 A1 offenbart eine Armatur für Schlauchleitungen für Hochdruckschlauchleitungen für Hochdruckreinigungsgeräte.

Nach dem Slippen eines Bootstrailers in Salzwasser setzen sich Salzrückstände in Form einer Salzkruste auf der Radbremse und deren Innenleben ab. Ohne Entfernung dieser Salzrückstände verringert sich die Bremsleistung aufgrund einer sich auf den Bremsbelägen und der Bremstrommel gebildeten Salzkruste. Weiterhin unterliegt die Radbremse aufgrund der Salzrückstände einer erhöhten Korrosion.

Aus dem Stand der Technik ist es bekannt, das Bremsschild einer Radbremse mit Gewindebohrungen zu versehen, in die eine Steckverschraubung eingeschraubt ist. Über einen mit der Steckverschraubung gekoppelten Wasserschlauch kann das Innenleben der Radbremse mit Frischwasser gespült werden, so dass Salzrückstände aus dem Inneren der Radbremse entfernt werden. Folglich ist es bei der bekannten Lösung notwendig, den Bremsteller der Radbremse mit zumindest einer Gewindebohrung zu versehen, damit das Innenleben der Radbremse über eine Steckverschraubung mit Frischwasser gespült werden kann.

Die der vorliegenden Erfindung zugrunde liegende Aufgabe ist es, eine kostengünstige Vorrichtung bereitzustellen, über die in das Innere einer Radbremse Frischwasser zugeführt werden kann, und die auf besonders einfache Art und Weise mit dem Bremsteller verbunden und von diesem getrennt werden kann.

Diese Aufgabe wird durch einen Spülanschlussstutzen mit den Merkmalen von Anspruch 1 gelöst. Vorteilhafte Ausführungsformen sind in den Unteransprüchen beschrieben.

Eine Radbremse, insbesondere eine Innenbackenbremse, weist in ihrem Bremsteller häufig zumindest ein Loch auf. Dieses Loch ist beispielsweise ein Schauloch/Sichtloch, mittels dem der Verschleiß der Bremsbacken visuell überprüft werden kann. Dafür ist das zumindest eine Schauloch derart angeordnet, dass durch Hindurchsehen durch das Schauloch die Bremsbelagsdicke überprüft werden kann.

Der erfindungsgemäße Spülanschlussstutzen umfasst zumindest zwei zusammensetzbare Spülanschlussstutzenteile, die jeweils eine sich entlang der gesamten Längsachse erstreckende Ausnehmung, einen Befestigungsbereich und einen Anschlussbereich aufweisen. Dabei weist jedes Spülanschlussstutzenteil im Befestigungsbereich eine bezüglich seiner Längsachse konvex gebogene Nut auf, die eine von der Längsachse weg gerichtete Nutöffnung aufweist. Ferner weist jedes Spülanschlussstutzenteil im Anschlussbereich entlang seiner Längserstreckung zumindest zwei Kontaktflächen auf. Die Spülanschlussstutzenteile sind so zusammensetzbar, dass zumindest eine Kontaktfläche jedes Spülanschlussstutzenteils mit einer Kontaktfläche eines anderen Spülanschlussstutzenteils in Kontakt steht, so dass die zusammengesetzten Spülanschlussstutzenteile den Spülanschlussstutzen bilden. Der so zusammengesetzte Spülanschlussstutzen umfasst eine aus den jeweiligen Nuten der Spülanschlussstutzenteile gebildete Befestigungsnut und einen rohrförmigen Anschlusspunkt.

Der erfindungsgemäße, aus mehreren Spülanschlussstutzenteilen zusammengesetzte Spülanschlussstutzen weist einen Spülanschlussstutzeneinlass, über den Wasser in den Spülanschlussstutzen eingelassen werden kann, und einen Spülanschlussstutzenauslass auf, über den das in dem Spülanschlussstutzen eingeleitete Wasser ausgelassen werden kann. Dabei sind die Befestigungsbereiche der jeweiligen Spülanschlussstutzenteile im Bereich des Spülanschlussstutzenauslasses angeordnet. Die jeweiligen Anschlussbereiche der Spülanschlussstutzenteile sind im Bereich des Spülanschlussstutzeneinlasses angeordnet. Die jeweiligen Ausnehmungen der Spülanschlussstutzenteile bilden einen Stutzenkanal.

Der erfindungsgemäße Spülanschlussstutzen kann auf besonders einfache Art und Weise mit dem Bremsteller einer Innenbackenbremse verbunden werden, indem ein Spülanschlussstutzenteil mittels seiner Nut mit einer Materialkante der Öffnung im Bremsteller (beispielsweise das Sichtloch) verbunden wird. Ein zweites Spülanschlussstutzenteil kann mit dem ersten Spülanschlussstutzenteil zusammengeführt werden, indem die Nut des zweiten Spülanschlussstutzenteils an die verbleibende Materialkante der Öffnung winkelig angelegt wird. Dabei ist die Materialkante der Öffnung noch nicht in der Nut komplett aufgenommen. Durch anschließendes Verkippen des zweiten Spülanschlussstutzenteils in Richtung des ersten Spülanschlussstutzenteils lassen sich die Kontaktflächen der zwei Spülanschlussstutzenteile miteinander in Kontakt bringen. Der Spülanschlussstutzen ist dann mittels seiner Befestigungsnut an der Materialkante der Öffnung befestigt.

Der erfindungsgemäße Spülanschlussstutzen kann auch mehr als zwei Spülanschlussstutzenteile umfassen. Ein Spülanschlussstutzen kann beispielsweise drei oder auch vier Spülanschlussstutzenteile umfassen.

Die jeweiligen Kontaktflächen der jeweiligen Spülanschlussstutzenteile können auch miteinander über eine Nut-Feder-Verbindung verbunden werden. Weiterhin ist es auch möglich, die Kontaktflächen nicht plan, sondern gebogen auszuführen, so dass die Kontaktflächen eines ersten Spülanschlussstutzenteiles beispielsweise eine konvexe Querschnittsform aufweisen, wohingegen die Kontaktflächen eines zweiten Spülanschlussstutzenteils eine konkave Querschnittsform aufweisen können. Weiterhin können auf den jeweiligen Kontaktflächen auch Dichteinrichtungen vorgesehen sein. Die Ausnehmungen in den Spülanschlussstutzenteilen sind vorzugsweise teilzylinderförmig ausgebildet.

Vorzugsweise ist die Befestigungsnut an zwei sich radial gegenüberliegenden Bereichen unterbrochen. Dadurch wird ein Befestigen der einzelnen Spülanschlussstutzenteile erleichtert, da die jeweiligen Spülanschlussstutzenteile leichter in ein Loch, insbesondere ein Sichtloch eines Bremsträgers hineingehebelt werden können.

Vorzugsweise definieren die zwei Kontaktflächen eines Spülanschlussstutzenteils eine Montagefläche, und jedes Spülanschlussstutzenteil verläuft im Befestigungsbereich unter Ausbildung eines Freiraums zur Montagefläche im Abstand zu dieser, so dass jedes Spülanschlussstutzenteil eine an die Kontaktflächen angrenzende Montageabrundung aufweist.

Durch eine entsprechende Ausgestaltung der Spülanschlussstutzenteile wird die Befestigung der jeweiligen Spülanschlussstutzenteile mit beispielsweise einem ein Sichtloch aufweisenden Bremsträger vereinfacht, da sich bei der oben beschriebenen Kippbewegung des zweiten Spülanschlussstutzenteils gegenüber dem ersten Spülanschlussstutzenteils diese in ihren jeweiligen Befestigungsbereichen nicht im Wege stehen.

Die Erfindung wird nachfolgend anhand von Ausführungsbeispielen weiter erläutert. Dabei zeigen im Einzelnen:
- Figur 1:: eine räumliche Darstellung einer Innenbackenbremse samt einem mit dem Bremsträger verbundenen erfindungsgemäßen Spülanschlussstutzen mit einem Schnitt längs der Linie A-A von Figur 2a;
- Figur 2a:: eine Seitenansicht der in Figur 1 dargestellten Innenbackenbremse;
- Figur 2b:: eine Seitenansicht der in Figur 2a dargestellten, um 90° um eine Vertikalachse gedrehten Innenbackenbremse;

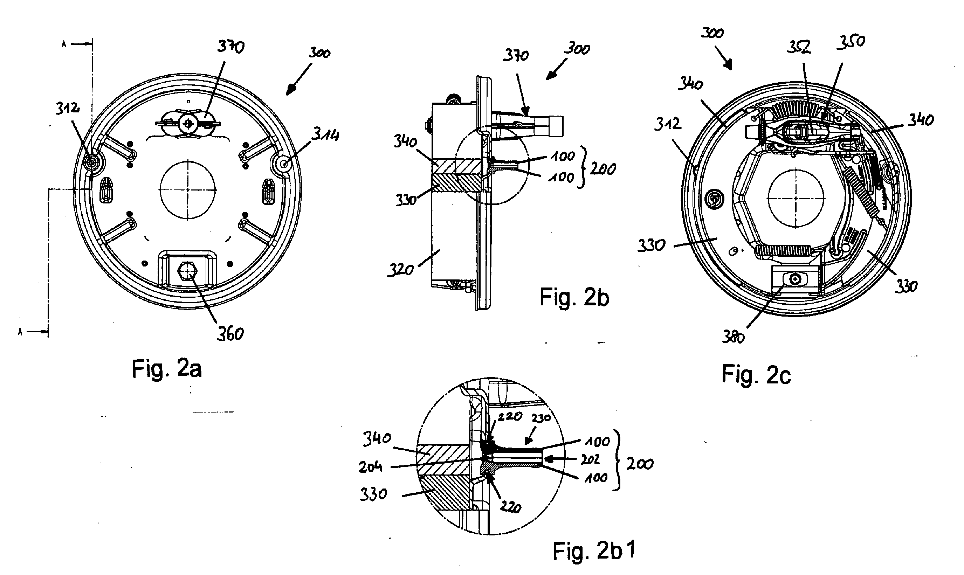

- Figur 2b1:: den in Figur 2b strichgepunkteten umrandeten Bereich in Vergrößerung;
- Figur 2c:: eine Seitenansicht der in Figur 2b dargestellten, um weitere 90° um die Vertikalachse gedrehten Innenbackenbremse;

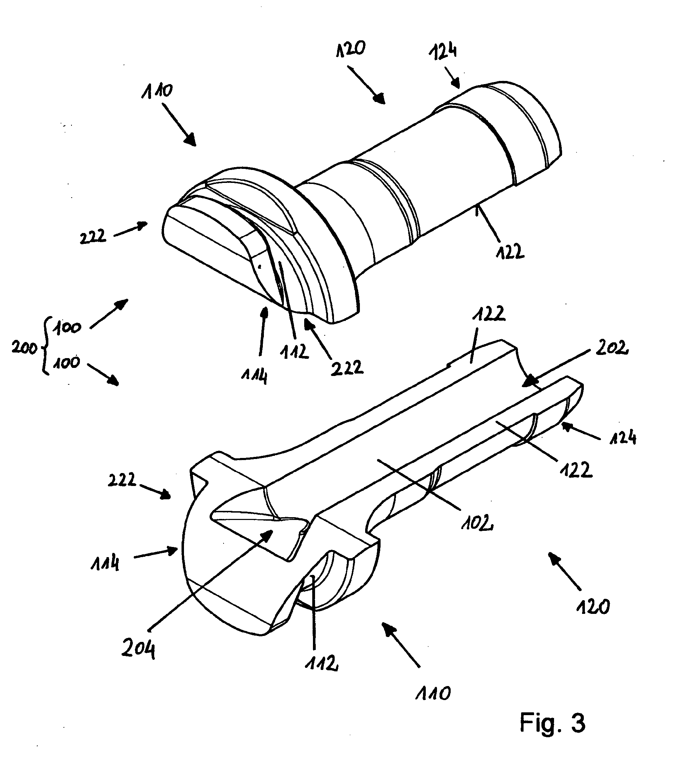

- Figur 3:: eine räumliche Explosionszeichnung eines erfindungsgemäßen, zwei Spülanschlussstutzenteile umfassenden Spülanschlussstutzens;

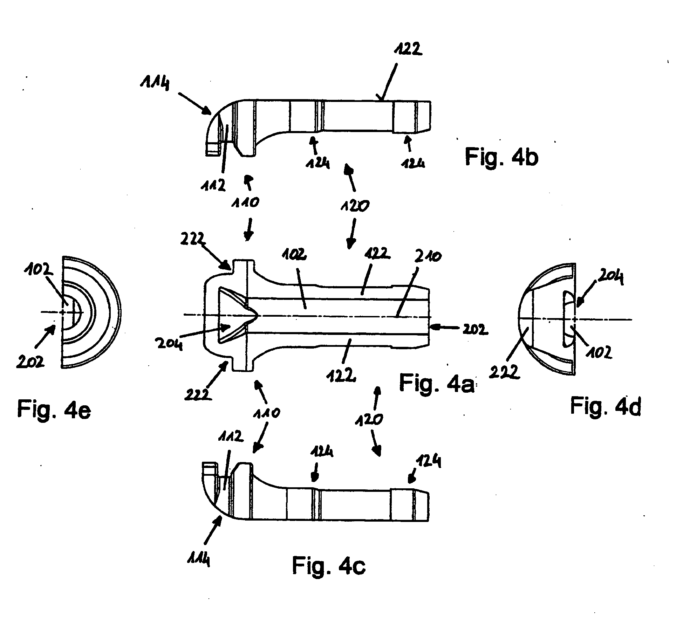

- Figur 4a:: eine Draufsicht auf ein in Figur 3 dargestelltes Spülanschlussstutzenteil;
- Figur 4b:: eine Seitenansicht auf den in Figur 4a dargestellten Spülanschlussstutzenteil;
- Figur 4c:: eine weitere Seitenansicht auf den in Figur 4a dargestellten Spülanschlussstutzenteil;
- Figur 4d:: eine Draufsicht auf den in den Figuren 4a bis 4c dargestellten Spülanschlussstutzenteil von der Spülanschlussstutzenauslassseite aus betrachtet; und
- Figur 4e:: eine Draufsicht auf den in den Figuren 4a bis 4d dargestellten Spülanschlussstutzenteil von der Spülanschlussstutzeneinlassseite aus betrachtet.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

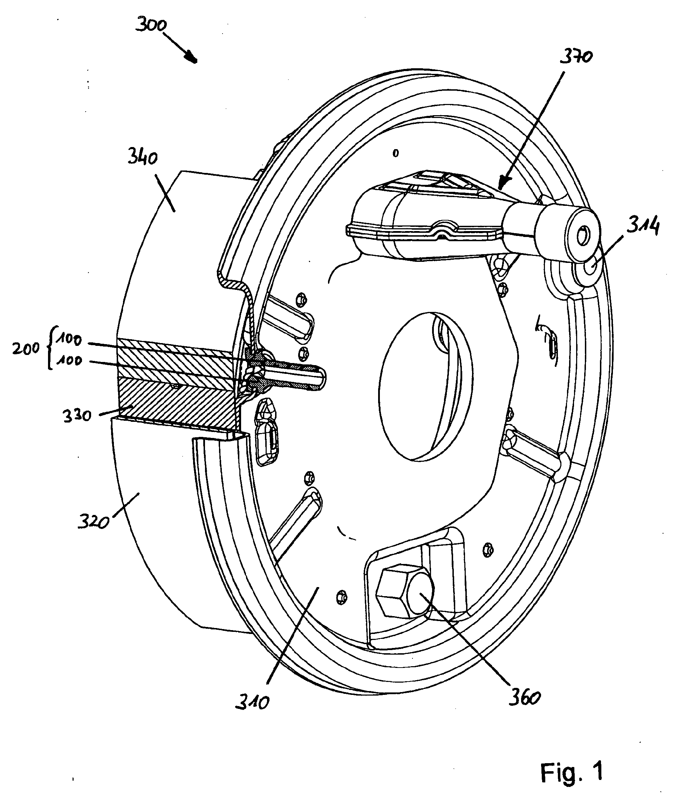

Figur 1 zeigt eine räumliche Darstellung einer Innenbackenbremse 300 samt einen mit einem Bremsträger 310 der Innenbackenbremse 300 verbundenen erfindungsgemäßen Spülanschlussstutzen 200, wobei längs der in Figur 2a dargestellten Linie A-A ein Schnitt durchgeführt ist. In den Figuren 2a bis 2c sind unterschiedliche Seitenansichten der in Figur 1 dargestellten Bremseinrichtung 300 dargestellt. Die Innenbackenbremse 300 umfasst eine Seileinführung 370 zum Einführen eines nicht dargestellten Bremsseils in die Innenbackenbremse 300, wobei das nicht dargestellte Bremsseil mit einem Spreizhebel 352 eines Spreizschlosses 350 verbunden werden kann. Die Innenbackenbremse 300 umfasst zwei Bremsbacken 330, die an einer in Figur 2c unten dargestellten Abstützeinrichtung 380 abgestützt sind. Die Bremsbacken 330 können mittels des Spreizschlosses 350 gespreizt werden, so dass auf den Bremsbacken 330 angeordnete Bremsbeläge 340 radial gegen eine Bremstrommel 320 der Innenbackenbremse 300 gedrückt werden können.

Im Laufe der Zeit nutzen sich durch Betätigen der Innenbackenbremse 300 die Bremsbeläge 340 ab, so dass diese bei Unterschreiten einer vorbestimmten Bremsbelagdicke ausgetauscht werden müssen. Zum Überprüfen der Bremsbelagdicke sind in dem Bremsträger 310 zwei Sichtlöcher 312 bzw. Schaulöcher 312 im Bereich der Bremsbeläge 340 vorgesehen. Somit kann durch Hindurchschauen durch die Sichtlöcher 312 die Materialstärke der Bremsbeläge 340 überprüft werden. Das in Figur 2a rechts dargestellte Sichtloch 312 ist mit einer Schutzkappe 314 verschlossen.

Eine entsprechend aufgebaute Innenbackenbremse 300 ist nicht wasserdicht, so dass beim Slippen eines nicht dargestellten Bootstrailers, an dessen Achsstummel jeweils die in den Figuren 1 bis 2c dargestellten Innenbackenbremsen 300 verbaut sind, in Salzwasser sich Salzrückstände in Form einer Salzkruste auf der Radbremse 300 und deren Innenleben absetzt. Diese Salzrückstände führen zu einer erhöhten Korrosion sämtlicher Bauteile der Innenbackenbremse 300. Weiterhin verringert sich ohne Entfernen dieser Salzrückstände die Bremsleistung aufgrund einer sich auf den Bremsbelägen 340 und der Bremstrommel 320 befindlichen Salzkruste. Zum Spülen des Innenlebens der Innenbackenbremse 300 ist ein Spülanschlussstutzen 200 vorgesehen, der in dem dargestellten Ausführungsbeispiel aus zwei Spülanschlussstutzenteilen 100 besteht. Der Spülanschlussstutzen 200 ist mit dem Bremsträger 310 dadurch verbunden, dass eine Befestigungsnut 220 des Spülanschlussstutzens 200 die das Sichtloch 312 umrandende Materialplatte des Bremsträgers 310 in sich aufnimmt. Mittels des so mit der Bremseinrichtung 300 verbundenen Spülanschlussstutzens 200 kann Spülwasser über einen Spülanschlussstutzeneinlass 202 in das Innere der Innenbackenbremse 300 eingeführt werden, wobei das Spülwasser den Spülanschlussstutzen an einem Spülanschlussstutzenauslass 204 verlässt.

Im Folgenden wird mit Bezug auf die Figuren 3 bis 4e der genaue Aufbau des erfindungsgemäßen Spülanschlussstutzens 200 erläutert. Der Spülanschlussstutzen 200 umfasst zwei Spülanschlussstutzenteile 100. Jedoch könnte der Spülanschlussstutzen 200 auch mehr als zwei Spülanschlussstutzenteile 100 umfassen. Jedes Spülanschlussstutzenteil 100 weist entlang seiner gesamten Längsachse, die parallel zu der in Figur 4 dargestellten Symmetrieachse 210 des Spülanschlussstutzens 200 verläuft, eine Ausnehmung 102 auf. Die in den Figuren 3 bis 4e dargestellten Ausnehmungen 102 sind dabei teilzylinderfömig ausgestaltet. Weiterhin weist jedes Spülanschlussstutzenteil 100 einen Befestigungsbereich 110 und einen Anschlussbereich 120 auf.

In dem Befestigungsbereich 110 weist jedes Spülanschlussstutzenteil 100 eine nach außen offne Umfangsnut 112, d.h. eine konvex gebogene Nut 112 auf, deren Nutöffnung von der Längsachse des Spülanschlussstutzenteils 100 weg gerichtet ist. Bei zwei zusammengesetzten Spülanschlussstutzenteilen 100 bilden zwei solcher Nuten 112 die in Figur 2b1 dargestellte Befestigungsnut 220 des Spülanschlussstutzens 200. Ferner weist jedes Spülanschlussstutzenteil 100 im Anschlussbereich 120 entlang seiner Längserstreckung zwei Kontaktflächen 122 auf. Durch Zusammensetzen bzw. Zusammenfügen der zwei Spülanschlussstutzenteile 100 sind die jeweiligen Kontaktflächen 122 jedes Spülanschlussstutzenteils mit den Kontaktflächen 122 des anderen Spülanschlussstutzenteils in Kontakt bringbar, so dass die so zusammengesetzten Spülanschlussstutzenteile 100 den Spülanschlussstutzen 200 bilden. In dem dargestellten Ausführungsbeispiel sind die Kontaktflächen 122 als Planflächen 122 ausgeführt, jedoch können auf den Kontaktflächen 122 beispielsweise auch Dichteinrichtungen in Form einer Silikondichtung oder Nuten bzw. Federn angeordnet sein, so dass zwei Spülanschlussstutzenteile 100 über entsprechende Nut-Feder-Verbindungen miteinander verbindbar wären.

Ein aus zwei Spülanschlussstutzenteilen 100 zusammengesetzter Spülanschlussstutzen 200 umfasst die in Figur 2b dargestellte Befestigungsnut 220, mittels der der Spülanschlussstutzen 200 an den Bremsteller 310 befestigbar ist, und einen rohrförmigen Anschluss 230, an dem beispielsweise ein Frischwasserschlauch angeschlossen werden kann.

Aus den Figuren 3 bis 4d ist ersichtlich, dass die Befestigungsnut 220 an zwei sich radial gegenüberliegenden Bereichen 222 unterbrochen ist, so dass die Befestigungsnut 220 bei dem zusammengesetzten Spülanschlussstutzen 200 nicht komplett umlaufend ist. Die Breite des die Nut 112 jedes Spülanschlussstutzenteils 100 begrenzenden äußeren Materialstegs ist gleich groß oder kleiner als der Durchmesser des Sichtlochs 312. Jedoch kann die Breite des Materialstegs auch ein wenig größer als der Durchmesser des Sichtlochs 312 sein, wenn die Spülanschlussstutzenteile 100 aus einem elastisch verformbaren Material gebildet sind. Der Spülanschlussstutzen 200 kann somit mit dem das Sichtloch 312 aufweisenden Bremsteller 310 dadurch verbunden werden, dass ein erstes Spülanschlussstutzenteil 100 in das Sichtloch 310 horizontal eingeführt wird und anschließend so auf die das Sichtloch 312 umrandende Wandung gedrückt wird, dass diese Wandung in der Nut 112 aufgenommen wird. Alternativ kann dass erste Spülanschlussstutzenteil 100 winklig an die das Sichtloch 312 umrandende Wandung angelegt werden, so dass die Wandung in der Nut 112 des ersten Spülanschlussstutzenteils 100 teilweise aufgenommen ist. Durch Kippen des ersten Spülanschlussstutzenteils 100 in eine horizontale Ausrichtung verbleibt die Wandung des Bremsträgers 310 in der Nut 112 des ersten Spülanschlussstutzenteils 100.

Ein zweites Spülanschlussstutzenteil 100 kann anschließend winklig an das erste Spülanschlussstutzenteil 100 angelegt werden, so dass die das Sichtloch 312 umgebende Wandung des Bremstellers 310 in der Nut 112 des zweiten Spülanschlussstutzenteils 100 teilweise aufgenommen ist. Durch Kippen des zweiten Spülanschlussstutzenteils 100 in Richtung des ersten Spülanschlussstutzenteils 100 verbleibt die das Sichtloch 312 umrandende Wandung des Bremsträgers 310 in der Nut 112 des zweiten Spülanschlussstutzenteils 100. Nach dem Schwenken des zweiten Spülanschlussstutzenteils 100 in die horizontale Ebene stehen dann die jeweiligen Kontaktflächen 122 beider Spülanschlussstutzenteile 100 in Kontakt, so dass der Spülanschlussstutzen 200 gebildet ist.

Aus Figur 3 ist ersichtlich, dass jedes Spülanschlussstutzenteil 100 in seinem Befestigungsbereich 110 eine Montageabrundung 114 aufweist. Dabei verläuft jedes Spülanschlussstutzenteil 100 im jeweiligen Befestigungsbereich 110 unter Ausbildung eines Freiraums zu einer Montagefläche, die durch die zwei Kontaktflächen 122 definiert ist, im Abstand zu dieser Montagefläche, so dass jedes Spülanschlussstutzenteil 100 die an den Kontaktflächen 122 angrenzenden Montageabrundung 114 aufweist. Die Montageabrundung 114 dient dazu, dass bei winkligem Ansetzen eines Spülanschlussstutzenteils 100 an ein anderes Spülanschlussstutzenteil 100 sich diese in ihren jeweiligen Befestigungsbereichen 110 bei einer Verkippung nicht im Wege stehen.

Aus den Figuren 3 bis 4c ist ersichtlich, dass jedes Spülanschlussstutzenteil 100 an seiner Außenseite Verdickungen 124 aufweist, die derart angeordnet sind, dass der aus den Spülanschlussstutzenteilen 100 zusammengesetzte Spülanschlussstutzen 200 Verrutschsicherungen aufweist, die ein Verrutschen eines auf dem Anschluss 230 des so gebildeten Spülanschlussstutzens 200 aufgespülten Wasserschlauchs verhindert.

Sämtliche oben beschriebenen Spülanschlussstutzenteile 100 können aus einem Kunststoff gefertigt sein, der vorzugsweise temperaturbeständig ist. Auch können sämtliche oben dargestellten Spülanschlussstutzenteile aus einem Metall, beispielsweise Aluminium oder Edelstahl, gefertigt sein.

### Bezugszeichenliste

- 100: Spülanschlussstutzenteil
- 102: Ausnehmung (des Spülanschlussstutzenteils)
- 110: Befestigungsbereich (des Spülanschlussstutzenteils)
- 112: Nut (des Spülanschlussstutzenteils)
- 114: Montageabrundung (des Spülanschlussstutzenteils)
- 120: Anschlussbereich (des Spülanschlussstutzenteils)
- 122: Kontaktfläche (des Spülanschlussstutzenteils)
- 124: Verdickung (des Spülanschlussstutzenteils)
- 200: Spülanschlussstutzen
- 202: Spülanschlussstutzeneinlass
- 204: Spülanschlussstutzenauslass
- 210: Symmetrieachse (des Spülanschlussstutzens)
- 220: Befestigungsnut (des Spülanschlussstutzens)
- 222: Bereich (des Spülanschlussstutzens, an dem die Befestigungsnut unterbrochen ist)
- 230: Anschluss (des Spülanschlussstutzens)
- 300: Bremseinrichtung / Innenbackenbremse
- 310: Bremsträger / Bremsteller
- 312: Sichtloch (im Bremsträger)
- 314: Schutzkappe (für Sichtloch)
- 320: Bremstrommel
- 330: Bremsbacke
- 340: Bremsbelag
- 350: Spreizschloss
- 352: Spreizhebel
- 360: Nachstellschraube
- 370: Seileinführung
- 380: Abstützeinrichtung

## Patentansprüche

1. Spülanschlussstutzen (200) für Bremsen **gekennzeichnet durch** die folgenden Merkmale:
- der Spülanschlussstutzen (200) umfasst zumindest zwei zusammensetzbare Spülanschlussstutzenteile (100), die jeweils eine sich entlang der gesamten Längsachse erstreckende Ausnehmung (102), einen Befestigungsbereich (110) und einen Anschlussbereich (120) aufweisen;
- jedes Spülanschlussstutzenteil (100) weist im Befestigungsbereich (110) eine Nut (112) auf, die eine von der Längsachse des Spülanschlussstutzenteils weg gerichtete Nutöffnung aufweist;
- jedes Spülanschlussstutzenteil (100) weist im Anschlussbereich (120) entlang seiner Längserstreckung zumindest zwei Kontaktflächen (122) auf;
- die Spülanschlussstutzenteile (100) sind so zusammensetzbar, dass zumindest eine Kontaktfläche (122) jedes Spülanschlussstutzenteils (100) mit einer Kontaktfläche (122) eines anderen Spülanschlussstutzenteils (100) in Kontakt steht, so dass die zusammengesetzten Spülanschlussstutzenteile (100) den Spülanschlussstutzen (200) bilden; und
- der Spülanschlussstutzen (200) umfasst eine aus den jeweiligen Nuten (112) der Spülanschlussstutzenteile (100) gebildete Befestigungsnut (220) und einen rohrförmigen Anschluss (230).

2. Spülanschlussstutzen (200) nach Anspruch 1, **dadurch gekennzeichnet, dass** bei zusammengesetzten Spülanschlussstutzenteilen (110) die zwei Kontaktflächen (122) des einen Spülanschlussstutzenteils (100) mit den zwei Kontaktflächen (122) des anderen Spülanschlussstutzenteils (100) in Kontakt stehen.

3. Spülanschlussstutzen (200) nach Anspruch 1 oder 2, **dadurch gekennzeichnet, dass** die Befestigungsnut (220) eine um den Spülanschlussstutzen (200) umlaufende Nut ist.

4. Spülanschlussstutzen (200) nach Anspruch 1 oder 2, **dadurch gekennzeichnet, dass** die Befestigungsnut (220) an zwei sich radial gegenüberliegenden Bereichen (222) unterbrochen ist.

5. Spülanschlussstutzen (200) nach einem der vorhergehenden Ansprüche, **gekennzeichnet durch** die folgenden Merkmale:
- die zwei Kontaktflächen (122) eines Spülanschlussstutzenteils (100) definieren eine Montageebene; und
- jedes Spülanschlussstutzenteil (100) verläuft im Befestigungsbereich (110) unter Ausbildung eines Freiraums zur Montageebene im Abstand zur Montageebene, so dass jedes Spülanschlussstutzenteil (100) eine an die Kontaktflächen (122) angrenzende Montageabrundung (114) aufweist.

6. Spülanschlussstutzen (200) nach einem der vorhergehenden Ansprüche, **dadurch gekennzeichnet, dass** jedes Spülanschlussstutzenteil (100) an seiner Außenseite zumindest eine Verdickung (124) aufweist, wobei die Verdickungen (124) an den Außenseiten der Spülanschlussstutzenteile (100) derart angeordnet sind, dass ein aus den Spülanschlussstutzenteilen (100) zusammengesetzter Spülanschlussstutzen (200) zumindest eine umlaufende Verrutschsicherung für einen auf den Spülanschlussstutzen 200 gestülpten Schlauch aufweist.

7. Spülanschlussstutzen (200) nach einem der vorhergehenden Ansprüche, **dadurch gekennzeichnet, dass** die Spülanschlussstutzenteile (100) aus Kunststoff gebildet sind.

8. Spülanschlussstutzen (200) nach einem Ansprüche 1 bis 5, **dadurch gekennzeichnet, dass** die Spülanschlussstutzenteile (100) aus Metall gebildet sind.

9. Bremseinrichtung (300), insbesondere Innenbackenbremse (300) mit einem Bremsträger (310), in dem ein Loch (312), insbesondere ein Sichtloch (312) vorgesehen ist, **dadurch gekennzeichnet, dass** ein Spülanschlussstutzen (200) nach einem der vorhergehenden Ansprüche mittels der Befestigungsnut (220) an dem das Loch (312) umrandenden Bremsträger (310) befestigt ist.

## Claims

1. Rinse connection piece (200) for brakes, **characterised by** the following features:
- the rinse connection piece (200) comprises at least two assemblable rinse connection piece parts (100) which each have a recess (102) extending along the entire longitudinal axis, an attachment region (110) and a connection region (120);
- in the attachment region (110), each rinse connection piece part (100) has a groove (112) having a groove opening which is directed away from the longitudinal axis of the rinse connection piece part;
- in the connection region (120), each rinse connection piece part (100) has at least two contact surfaces (122) along its longitudinal extension;
- the rinse connection piece parts (100) can be assembled such that at least one contact surface (122) of each rinse connection piece part (100) contacts one contact surface (122) of another rinse connection piece part (100) so that the assembled rinse connection piece parts (100) form the rinse connection piece (200); and
- the rinse connection piece (200) comprises an attachment groove (220) formed from the respective grooves (112) in the rinse connection piece parts (100), and a tubular connection (230).

2. Rinse connection piece (200) according to claim 1, **characterised in that**, when the rinse connection piece parts (110) are assembled, the two contact surfaces (122) of one rinse connection piece part (100) contact the two contact surfaces (122) of the other rinse connection piece part (100).

3. Rinse connection piece (200) according to either claim 1 or claim 2, **characterised in that** the attachment groove (220) is a circumferential groove around the rinse connection piece (200).

4. Rinse connection piece (200) according to either claim 1 or claim 2, **characterised in that** the attachment groove (220) is interrupted at two radially opposite regions (222).

5. Rinse connection piece (200) according to any of the preceding claims, **characterised by** the following features:
- the two contact surfaces (122) of one rinse connection piece part (100) define a mounting plane; and
- each rinse connection piece part (100) extends in the attachment region (110), forming a clearance towards the mounting plane at a spacing from the mounting plane so that each rinse connection piece part (100) has an mounting curvature (114) abutting the contact surfaces (122).

6. Rinse connection piece (200) according to any of the preceding claims, **characterised in that** each rinse connection piece part (100) has on its outside at least one thickened portion (124), the thickened portions (124) being arranged on the outsides of the rinse connection piece parts (100) such that a rinse connection piece (200) assembled from the rinse connection piece parts (100) has at least one circumferential anti-slip means for a tube pulled onto the rinse connection piece (200).

7. Rinse connection piece (200) according to any of the preceding claims, **characterised in that** the rinse connection piece parts (100) are made of plastics material.

8. Rinse connection piece (200) according to any of claims 1 to 5, **characterised in that** the rinse connection piece parts (100) are made of metal.

9. Braking device (300), in particular an internal shoe brake (300) comprising a backing plate (310) in which a hole (312), in particular an inspection hole (312), is provided, **characterised in that** a rinse connection piece (200) according to any of the preceding claims is attached to the backing plate (310) surrounding the hole (312) by means of the attachment groove (220).

## Revendications

1. Pipe de raccordement de rinçage (200) pour freins, **caractérisée par** les caractéristiques suivantes :
- la pipe de raccordement de rinçage (200) comprend au moins deux parties de pipe de raccordement de rinçage (100) capables d'être assemblées l'une à l'autre, qui comportent chacune un évidement (102) s'étendant le long de la totalité de l'axe longitudinal, une zone de fixation (110) et une zone de raccordement (120) ;
- chaque partie de pipe de raccordement de rinçage (100) comporte dans la zone de fixation (110) une gorge (112) qui présente une ouverture orientée en éloignement de l'axe longitudinal de la partie de pipe de raccordement de rinçage ;
- chaque partie de pipe de raccordement de rinçage (100) comporte dans la zone de raccordement (120) au moins deux surfaces de contact (122) le long de son extension longitudinale ;
- les parties de pipe de raccordement de rinçage (100) sont susceptibles d'être assemblées l'une à l'autre de telle façon qu'au moins une surface de contact (122) de chaque partie de pipe de raccordement de rinçage (100) est en contact avec une surface de contact (122) d'une autre partie de pipe de raccordement de rinçage (100), de sorte que les parties de pipe de raccordement de rinçage (100) assemblées l'une à l'autre forment la pipe de raccordement de rinçage (200) ; et
- la pipe de raccordement de rinçage (200) comporte une gorge de fixation (120), formée par les gorges respectives (112) des parties de pipe de raccordement de rinçage (100) et un raccord de forme tubulaire (230).

2. Pipe de raccordement de rinçage (200) selon la revendication 1, **caractérisée en ce que** lorsque les parties de pipe de raccordement de rinçage (110) sont assemblées ensemble les deux surfaces de contact (122) de l'une des parties de pipe de raccordement de rinçage (100) sont en contact avec les deux surfaces de contact (122) de l'autre partie de pipe de raccordement de rinçage (100).

3. Pipe de raccordement de rinçage (200) selon la revendication 1 ou 2, **caractérisée en ce que** la gorge de fixation (220) est une gorge périphérique autour de la pipe de raccordement de rinçage (200).

4. Pipe de raccordement de rinçage (200) selon la revendication 1 ou 2, **caractérisée en ce que** la gorge de fixation (220) est interrompue au niveau de deux régions (220) mutuellement radialement opposées.

5. Pipe de raccordement de rinçage (200) selon l'une des revendications précédentes, **caractérisée par** les caractéristiques suivantes :
- les deux surfaces de contact (122) d'une partie de pipe de raccordement de rinçage (100) définissent un plan de montage ; et
- chaque partie de pipe de raccordement de rinçage (100) s'étend dans la région de fixation (110) en formant un espace libre vers le plan de montage à distance du plan de montage, de sorte que chaque partie de pipe de raccordement de rinçage (100) comporte un arrondi de montage (114) adjacent aux surfaces de contact (122).

6. Pipe de raccordement de rinçage (200) selon l'une des revendications précédentes, **caractérisée en ce que** chaque partie de pipe de raccordement de rinçage (100) comporte sur sa face extérieure au moins un épaississement (124), tels que les épaississements (124) sont agencés sur les faces extérieures des parties de pipe de raccordement de rinçage (100) de telle façon qu'une pipe de raccordement de rinçage (200) assemblée à partir des parties de pipe de raccordement de rinçage (100) comporte au moins une sécurité périphérique anti-ripage pour un tuyau enfilé sur la pipe de raccordement de rinçage (200).

7. Pipe de raccordement de rinçage (200) selon l'une des revendications précédentes, **caractérisée en ce que** les parties de pipe de raccordement de rinçage (100) sont réalisées en matière plastique.

8. Pipe de raccordement de rinçage (200) selon l'une des revendications 1 à 5, **caractérisée en ce que** les parties de pipe de raccordement de rinçage (100) sont réalisées en métal.

9. Dispositif de freinage (300), en particulier frein à mâchoires internes (300), comprenant un support de frein (310) dans lequel est prévu un trou (312), en particulier un trou d'observation (312), **caractérisé en ce qu'**une pipe de raccordement de rinçage (200) selon l'une des revendications précédentes est fixée au moyen de la gorge de fixation (220) sur le support de frein (310) qui entoure le trou (312).
